# EUROPÄISCHE PATENTANMELDUNG

(11) **EP 1 139 333 A2**
(43) Veröffentlichungstag der Anmeldung: **04.10.2001**
(21) Anmeldenummer: 01106000.1
(22) Anmeldetag: 10.03.2001
(51) Int. Cl.: G10L 15/26, G10L 15/22

(54) **Spracherkennungsverfahren und Spracherkennungsvorrichtung**

(30) Priorität: 30.03.2000 DE 10015960
(71) Anmelder: Micronas Munich GmbH, 81541 München (DE)
(72) Erfinder: Burchard, Bernd, Dr., 45276 Essen (DE); Schneider, Tobias, Dr., 81825 München (DE); Volk, Thomas, 81737 München (DE); Fournier, Jean-Philippe, 92542 Montrouge (FR)
(74) Vertreter: Patentanwälte Westphal, Mussgnug & Partner

(57) **Zusammenfassung**

Zur Steuerung eines beliebigen Systems mittels Spracherkennung wird vorgeschlagen, die Spracherkennung in Form einer vordefinierten Zustandsfolge (100-104) durchzuführen, wobei bei Erkennen eines entsprechenden Sprachbefehls von einem Zustand in einen anderen Zustand gewechselt wird und der Wechsel in Abhängigkeit von mindestens einem Spracherkennungsparameter erfolgt. Die Spracherkennungsparameter können beispielsweise die sogenannte 'False Acceptance Rate" (FAR) und/oder 'False Rejection Rate' (FRR) beeinflussen, die somit für die einzelnen Zustände (100-104) auf zustandsindividuelle Werte eingestellt werden, um eine verbesserte Erkennungsgenauigkeit zu erzielen.

## Beschreibung

Die vorliegende Erfindung betrifft ein Spracherkennungsverfahren nach dem Oberbegriff des Anspruches 1 sowie eine Spracherkennungsvorrichtung nach dem Oberbegriff des Anspruches 8.

Sprachgesteuerte Systeme sind heutzutage weitläufig bekannt und bieten den Vorteil, daß die steuernde Person nicht zu einem direkten Kontakt mit dem jeweils zu steuernden Gerät gezwungen ist.

Die eigentliche Spracherkennung erfolgt mit Hilfe entsprechender Spracherkennungsalgorithmen, die auf ein vorgegebenes Sprachvokabular zugreifen. Die Spracherkennungsalgorithmen müssen derart beschaffen sein, daß der an das zu steuernde Gerät gerichtete Sprachbefehl möglichst gut von ähnlichen Umgebungsgeräuschen oder Lautfolgen unterschieden werden kann.

Dabei tritt das Problem auf, daß teilweise auch Lautfolgen als ein Sprachbefehl erkannt werden, obwohl diese nicht zu dem ursprünglich vorgesehenen Sprachvokabular gehören. Diese irrtümliche Akzeptierung einer vermeintlichen Sprachbefehls wird durch die sogenannten 'False Acceptance Rate' (FAR) beschrieben, die angibt, wie viele Lautfolgen als Sprachbefehl erkannt wurden, obwohl sie nicht zu dem vorgesehenen Vokabular gehörten. Die FAR-Rate ist somit ein Maß für die Akzeptanzempfindlichkeit bzw. Akzeptanzschwelle, anhand der entschieden wird, daß eine Lautfolge als Sprachbefehl akzeptiert und anschließend entsprechend ausgewertet wird.

Ebenso werden teilweise Sprachbefehle nicht erkannt, obwohl sie zu dem ursprünglich vorgesehenen Sprachvokabular gehören. Diese irrtümliche Zurückweisung von korrekten Sprachbefehlen wird durch die sogenannten 'False Rejection Rate' (FRR) beschrieben, die angibt, wie viele Sprachbefehle nicht erkannt wurden, obwohl sie zu dem vorgesehenen Vokabular gehörten. Die FRR-Rate ist somit ein Maß für die Zurückweisungsempfindlichkeit oder Zurückweisungsschwelle, bei der ein Sprachbefehl nicht erkannt wird.

Bei der Steuerung eines Geräts mittels Sprache ohne Verwendung eines zusätzlichen Signalgebers, wie beispielsweise eines Tasters oder Schalters, besteht das Problem darin, gleichzeitig eine möglichst optimale FAR-Rate und FRR-Rate zu erzielen. Beide Fehlerraten sollten im Idealfall minimal sein.

Algorithmusbedingt sind die beiden Fehlerraten oder Empfindlichkeiten jedoch gegenläufig, d.h. eine ansteigende FAR-Rate ist mit einer abfallenden FRR-Rate verbunden und umgekehrt, so daß sich beide Fehlerraten nicht gleichzeitig optimieren lassen. Im Extremfall wird kein Sprachbefehl erkannt (d.h. FAR = 0%, FRR = 100%) bzw. alle Lautfolgen als Sprachbefehl akzeptiert (FAR = 100%, FRR = 0%).

In herkömmlichen Spracherkennungssystemen wird u.a. ein Spracherkennungsverfahren nach dem Oberbegriff des Anspruches 1 mit Hilfe von 'Keyword Spotting' angewendet, bei dem das Erkennen eines Schlüsselworts ('Keyword') erforderlich ist, welches den Beginn einer Befehlssequenz markiert und zur Aktivierung der eigentlichen Spracherkennungsfunktion des jeweiligen sprachgesteuerten Geräts dient. Nach dem Erkennen des Schlüsselworts wird von dem Spracherkennungsalgorithmus dann auf die Eingabe eines Sprachbefehls gewartet, der einen Menüpunkt auswählt oder einen entsprechenden Steuerparameter einstellt. Durch den Sprachbefehl 'Lautstärke' kann somit beispielsweise der Menüpunkt zur Einstellung der Lautstärke ausgewählt werden, während durch den Sprachbefehl 'leise' der entsprechende Lautstärkeparameter eingestellt wird. Durch die optionale Eingabe eines geeigneten Schlußbefehls, wie beispielsweise 'Ende', kann die Befehlssequenz beendet werden.

Ebenso kann der Spracherkennungsalgorithmus jedoch auch das Ende der Befehlssequenz aus dem vorgegebenen und zuvor durchlaufenen Menüschema erkennen.

Bei diesen Spracherkennungssystemen werden somit verschiedene Zustände durchlaufen, wobei im ersten Zustand auf die Erkennung des Schlüsselworts gewartet wird. Nach dem Erkennen des Schlüsselworts wird in mindestens einem weiteren Zustand auf die Erkennung eines Sprachbefehls zur Auswahl eines Menüpunkts bzw. zur Einstellung eines entsprechenden Parameters gewartet. Die Erkennung der einzelnen Sprachbefehle wird dabei in den einzelnen Zuständen mit konstanten Werten für die FAR-Rate und die FRR-Rate durchgeführt, die derart eingestellt sind, daß ein suboptimaler Kompromiß realisiert ist. Bei dieser Vorgehensweise treten jedoch, da keiner der Parameter auf einen optimalen Wert eingestellt ist, wesentliche Fehlauslösungen auf.

Der vorliegenden Erfindung liegt die Aufgabe zugrunde, ein Spracherkennungsverfahren und eine Spracherkennungsvorrichtung vorzuschlagen, bei der die Spracherkennungsgenauigkeit, d.h. die Wahrscheinlichkeit von Fehlauslösungen, verringert ist.

Diese Aufgabe wird erfindungsgemäß durch ein Spracherkennungsverfahren mit den Merkmalen des Anspruches 1 bzw. eine Spracherkennungsvorrichtung mit den Merkmalen des Anspruches 8 gelöst. Die Unteransprüche definieren jeweils bevorzugte und vorteilhafte Ausführungsformen der vorliegenden Erfindung.

Erfindungsgemäß erfolgt die Spracherkennung mit zustandsspezifisch eingestellten Spracherkennungsparametern, welche auch als sogenannten 'Scores' bezeichnet werden. Die Spracherkennungsparameter werden in den einzelnen Zuständen somit auf unterschiedliche Werte eingestellt, so daß beispielsweise die FAR-Rate und die FRR-Rate entsprechend zustandsspezifisch beeinflußt werden. Diese Vorgehensweise besitzt den Vorteil, daß die Spracherkennungsparameter für jeden Zustand optimal angepaßt werden können. Mit Hilfe der vorliegenden Erfindung kann der Tatsache Rechnung getragen werden, daß das jeweils gewünschte Empfindlichkeitsverhalten des Spracherkenners zumindest in gewissen Grenzen vom jeweiligen Zustand abhängig ist.

Insbesondere ist es vorteilhaft, wenn in demjenigen Zustand, in dem auf die Eingabe des Schlüsselworts gewartet wird, für die FAR-Rate ein geringerer Wert als in den anderen Zuständen gewählt wird, so daß die der FAR-Rate entsprechende Akzeptanzschwelle, bei der eine Lautfolge als Sprachbefehl erkannt wird, erhöht wird, wodurch der Benutzer gezwungen wird, das Schlüsselwort deutlich zu sprechen und gegebenenfalls zu wiederholen. Mit der Minimierung der FAR-Rate ist in der Regel eine Erhöhung der FRR-Rate verbunden, d.h. die Zurückweisungsschwelle, bei der ein Sprachbefehl nicht erkannt wird, wird herabgesetzt.

Nach Erkennen des Schlüsselworts kann die FAR-Rate erhöht und damit die Akzeptanzschwelle herabgesetzt werden. Gleichzeitig wird die FRR-Rate reduziert und damit die Wahrscheinlichkeit einer irrtümlichen Zurückweisung eines Sprachbefehls verringert. Hierdurch wird die Wahrscheinlichkeit einer Fehlauslösung von komplexeren Sprachbefehlen gesenkt und gleichzeitig der Bedienungskomfort gesteigert.

Durch die zuvor beschriebene zustandsabhängige Einstellung der Spracherkennungsparameter kann die Tatsache ausgenutzt werden, daß die Wahrscheinlichkeit für ein Steuerwort bzw. einen Steuerbefehl nach Erkennen des Schlüsselworts bei nahezu 100% liegt, da bei anderen Gelegenheiten als dem Ausgangszustand, in dem auf die Eingabe des Schlüsselworts gewartet wird, das Auftreten des Schlüsselworts unwahrscheinlich ist.

Ein bevorzugtes Anwendungsgebiet der vorliegenden Erfindung ist der Bereich der Unterhaltungselektronik, wo die Sprachsteuerung zunehmend an Bedeutung gewinnen wird. Die Erfindung eignet sich jedoch im Prinzip für beliebig ausgestaltete Systeme, die mittels Spracherkennung gesteuert werden sollen. Des weiteren ist die Erfindung nicht nur auf die Einstellung der FAR-Rate und der FRR-Rate beschränkt, sondern kann auch auf die Einstellung anderer Spracherkennungsparameter angewendet werden, die für die Spracherkennungsfunktion maßgeblich sind.

Die Erfindung wird nachfolgend näher unter Bezugnahme auf die Zeichnung anhand eines bevorzugten Ausführungsbeispiels beschrieben.

Fig. 1 zeigt den Ablauf eines erfindungsgemäßen Spracherkennungsverfahrens, und

Fig. 2 zeigt ein vereinfachtes Blockschaltbild eines erfindungsgemäßen Spracherkennungsvorrichtung.

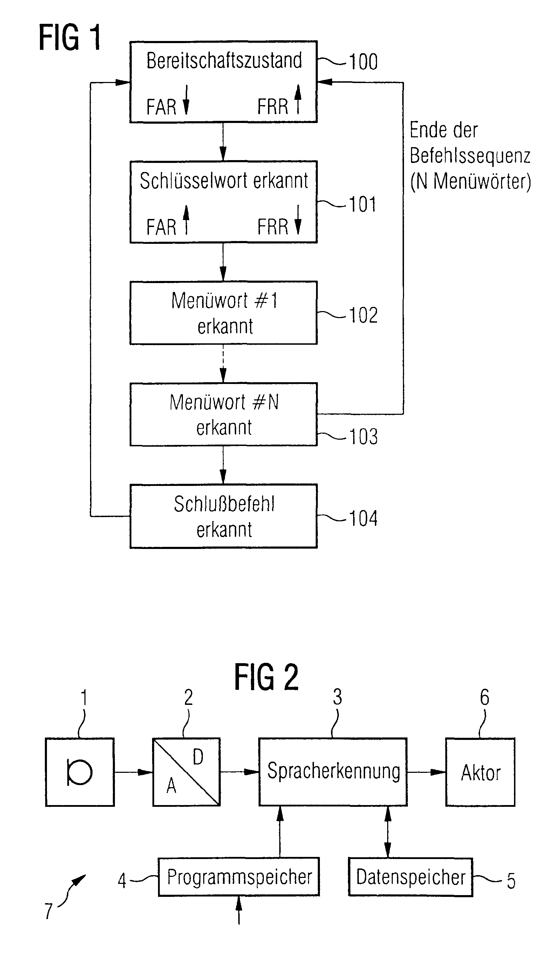

In Fig. 2 ist schematisch der Aufbau einer Spracherkennungsvorrichtung dargestellt, wie sie beispielsweise in einem sprachgesteuerten Fernsehgerät oder dergleichen eingesetzt werden kann.

Die Spracherkennungsvorrichtung 7 umfaßt ein Mikrofon oder Mikrofon-Array 1, über welches externe Schallsignale erfaßt werden. Die Schallsignale werden mit Hilfe eines (nicht gezeigten) Verstärkers verstärkt und mit Hilfe eines Analog/Digital-Wandlers 2 digitalisiert. Der digitale Datenstrom wird anschließend einer Spracherkennungseinheit 3 zugeführt, welche mit Hilfe eines Spracherkennungsalgorithmus versucht, in den einzelnen Schallsignalen enthaltene Sprachbefehle eines Benutzers zu erkennen. Zu diesem Zweck greift die Spracherkennungseinheit 3 auf einen Programmspeicher 4 zu, in dem das jeweils auszuführende Spracherkennungsprogramm abgelegt ist. Zudem kommuniziert die Spracherkennungseinheit 3 mit einem Datenspeicher 5, der zum Zwischenspeichern von Daten, insbesondere der von dem Analog/Digital-Wandler 2 kommenden Daten, dient und auch alternativ mit dem Programmspeicher 4 durch einen gemeinsamen Speicher realisiert sein kann.

Der Programmspeicher 4 ist mit einer Programmierschnittstelle verbunden, über welche das gespeicherte Spracherkennungsprogramm verändert und insbesondere die für den jeweiligen Spracherkennungsalgorithmus maßgeblichen Spracherkennungsparameter eingestellt werden können, um insbesondere die FAR-Rate und die FRR-Rate für jeden Zustand auf gewünschte Werte einzustellen.

Nach Erkennen eines Sprachbefehls, welcher zu einer gewünschten Einstellung eines bestimmten Parameters der jeweiligen sprachgesteuerten Vorrichtung führen soll, wird dieser Sprachbefehl von der Spracherkennungseinheit 3 in ein entsprechendes Steuersignal für einen geeigneten Aktor 6 bzw. ein geeignetes Stellglied der sprachgesteuerten Vorrichtung, wie beispielsweise einen Schalter oder Regler etc., umgesetzt, um die dem erkannten Sprachbefehl entsprechende gewünschte Einstellung herbeizuführen.

Die von der Spracherkennungseinheit 3 durchgeführte Spracherkennung erfolgt im wesentlichen nach dem in Fig. 1 gezeigten Zustandsschema.

In einem Bereitschaftszustand ('Idle State') 100 wartet die Spracherkennungseinheit 3 auf das Erscheinen eines bestimmten Schlüsselworts. Das Erkennen des Schlüsselworts hat die Selbstaktivierung der Spracherkennungsfunktion zur Folge. Bei dem Schlüsselwort sollte es sich um einen Begriff handeln, der in der normalen Sprache nicht vorkommt (beispielsweise 'Akustik-TV' zur Sprachsteuerung eines Fernsehgeräts), so daß Fehlauslösungen durch den nicht ausgewerteten Kontext des jeweils gesprochenen Befehls unwahrscheinlich sind.

Im Bereitschaftszustand 100, in dem auf die Eingabe des Schlüsselworts gewartet wird, ist die FAR-Rate auf einen relativ niedrigen Wert, insbesondere auf einen niedrigeren Wert als in den anderen Zuständen, eingestellt, so daß die der FAR-Rate entsprechende Akzeptanzschwelle, bei der eine Lautfolge als Sprachbefehl erkannt wird, erhöht wird, wodurch der Benutzer gezwungen wird, das Schlüsselwort deutlich zu sprechen und gegebenenfalls zu wiederholen. Mit der Minimierung der FAR-Rate ist in der Regel eine Erhöhung der FRR-Rate verbunden.

Nach Erkennen des Schlüsselworts wird in einen Zustand 101 gewechselt, in dem die Spracherkennungseinheit 3 auf das Auftreten eines Sprachbefehls wartet, durch den ein Menüpunkt ausgewählt oder ein gewünschter Parameter, beispielsweise die Lautstärke, des sprachgesteuerten Geräts auf einen gewünschten Wert eingestellt wird.

Im folgenden wird davon ausgegangen, daß bis zur Einstellung eines Steuerparameters insgesamt N Sprachbefehle oder Menüwörter eingegeben werden müssen.

Nach Erkennen des ersten Menüworts wird somit in einen Zustand 102 gewechselt. Nach dem Erkennen des N-ten Menüworts, durch welches der gewünschte Parameter auf einen gewünschten Wert eingestellt wird, befindet sich die Spracherkennungseinheit 3 in einem Zustand 103. Diesen Zustand 103 erreicht die Spracherkennungseinheit 3 nur, wenn sowohl das Schlüsselwort als auch sämtliche N Menüwörter erkannt wurden.

In diesem Zustand 103 kann die Spracherkennungseinheit 3 in Kenntnis der sinnvollen Befehlssequenzlänge N das Ende dieser Befehlsfolge erkennen und automatisch wieder in den Bereitschaftszustand 100 wechseln.

Alternativ kann die Spracherkennungseinheit 3 im Zustand 103 auch auf das Auftreten eines geeigneten Schlußbefehls warten, durch welchen der Benutzer das Ende der Befehlssequenz mitteilt. Das Erkennen dieses Schlußbefehls hat einen Wechsel in einen Endzustand 104 zur Folge, wobei anschließend die Spracherkennungseinheit 3 wieder in den Bereitschaftszustand 100 zurückkehrt.

Nach Erkennen des Schlüsselworts im Zustand 100 kann die FAR-Rate erhöht und damit die Akzeptanzschwelle herabgesetzt werden. Gleichzeitig wird die FRR-Rate reduziert und damit die Wahrscheinlichkeit einer irrtümlichen Zurückweisung eines Sprachbefehls verringert. Diese Einstellung kann für die dem Bereitschaftszustand 100 nachfolgenden Zustände 101-104 beibehalten werden. Hierdurch wird die Wahrscheinlichkeit einer Fehlauslösung von komplexeren Sprachbefehlen gesenkt und gleichzeitig der Bedienungskomfort gesteigert.

## Patentansprüche

1. Spracherkennungsverfahren,
wobei ein Sprachbefehl erkannt und eine zu steuernde Vorrichtung entsprechend gesteuert wird,
wobei das Spracherkennungsverfahren in Form einer vordefinierten Zustandsfolge (100-104) erfolgt, wobei bei Erkennen eines entsprechenden Sprachbefehls von einen Zustand in einen anderen Zustand gewechselt wird und in jedem Zustand die Spracherkennung gemäß mindestens einem Spracherkennungsparameter durchgeführt wird,
**dadurch gekennzeichnet,**
**daß** der mindestens eine Spracherkennungsparameter für die einzelnen Zustände (100-104) individuell eingestellt wird.

2. Spracherkennungsverfahren nach Anspruch 1,
**dadurch gekennzeichnet,**
**daß** der mindestens eine Spracherkennungsparameter zur entsprechenden zustandsindividuellen Einstellung einer ersten Spracherkennungsrate (FAR) für die einzelnen Zustände (100-104) individuell eingestellt wird,
wobei die erste Spracherkennungsrate (FAR) ein Maß dafür ist, wie viele Sprachbefehle als solche erkannt werden, obwohl sie nicht zu einem dem Spracherkennungsverfahren zugrundeliegenden Spracherkennungsvokabular gehören.

3. Spracherkennungsverfahren nach Anspruch 1 oder 2,
**dadurch gekennzeichnet,**
**daß** der mindestens eine Spracherkennungsparameter zur entsprechenden zustandsindividuellen Einstellung einer zweiten Spracherkennungsrate (FRR) für die einzelnen Zustände (100-104) individuell eingestellt wird,
wobei die zweite Spracherkennungsrate (FRR) ein Maß dafür ist, wie viele Sprachbefehle nicht erkannt werden, obwohl sie zu einem dem Spracherkennungsverfahren zugrundeliegenden Spracherkennungsvokabular gehören.

4. Spracherkennungsverfahren nach einem der vorhergehenden Ansprüche,
**dadurch gekennzeichnet,**
**daß** in einem ersten Zustand (100) auf ein gesprochenes Schlüsselwort zur Aktivierung der Spracherkennung gewartet wird, und
**daß** nach Erkennen des gesprochenes Schlüsselworts von dem ersten Zustand (100) in mindestens einen zweiten Zustand (101-103) gewechselt wird, in dem auf einen Sprachbefehl zur Auswahl und/oder Einstellung eines Parameters der zu steuernden Vorrichtung gewartet wird.

5. Spracherkennungsverfahren nach Anspruch 4 und Anspruch 2,
**dadurch gekennzeichnet,**
**daß** die erste Spracherkennungsrate (FAR) in dem ersten Zustand (100) auf einen ersten Wert und in dem zweiten Zustand (101-103) auf einen zweiten Wert eingestellt wird,
wobei der erste und zweite Wert für die erste Spracherkennungsrate (FAR) derart gewählt werden, daß die Rate der Sprachbefehle, die in dem jeweiligen Zustand als solche erkannt werden, obwohl sie nicht zu dem Spracherkennungsvokabular gehören, in dem ersten Zustand (100) kleiner als in dem zweiten Zustand (101-103) ist.

6. Spracherkennungsverfahren nach Anspruch 4 und Anspruch 3,
**dadurch gekennzeichnet,**
**daß** die zweite Spracherkennungsrate (FRR) in dem ersten Zustand (100) auf einen ersten Wert und in dem zweiten Zustand (101-103) auf einen zweiten Wert eingestellt wird,
wobei der erste und zweite Wert für die zweite Spracherkennungsrate (FRR) derart gewählt werden, daß die Rate der Sprachbefehle, die in dem jeweiligen Zustand nicht erkannt werden, obwohl sie zu dem Spracherkennungsvokabular gehören, in dem ersten Zustand (100) größer als in dem zweiten Zustand (101-103) ist.

7. Spracherkennungsverfahren nach einem der Ansprüche 4-6,
**dadurch gekennzeichnet,**
**daß** bei Erkennen eines gesprochenen Schlußbefehls, welcher das Ende der Sprachsteuerung für die zu steuernde Vorrichtung bezeichnet, oder bei Erkennen einer vorgegebenen Folge von Sprachbefehlen von dem zweiten Zustand (101-103) wieder in den ersten Zustand (100) gewechselt wird.

8. Spracherkennungsvorrichtung,
mit Schallerfassungsmitteln (1) zum Erfassen eines Schallsignals, und
mit Spracherkennungsmitteln (3) zum Erkennen eines in einem erfaßten Schallsignal enthaltenen Sprachbefehls und zum Umsetzen des erkannten Sprachbefehls in ein entsprechendes Steuersignal für eine zu steuernde Vorrichtung,
wobei die Spracherkennungsmittel (3) derart ausgestaltet sind, daß sie die Spracherkennung in Form einer vordefinierten Zustandsfolge (100-104) durchführen und bei Erkennen eines entsprechenden Sprachbefehls von einen Zustand in einen anderen Zustand wechseln, wobei sie Spracherkennungsmittel (3) die Spracherkennung in jedem Zustand gemäß mindestens einem Spracherkennungsparameter durchführen,
**dadurch gekennzeichnet,**
**daß** der mindestens eine Spracherkennungsparameter für die einzelnen Zustände (100-104) auf unterschiedliche Werte eingestellt ist.

9. Spracherkennungsvorrichtung nach Anspruch 8,
**dadurch gekennzeichnet,**
**daß** Programmiermittel (4) zum Programmieren des mindestens einen Spracherkennungsparameters auf die den einzelnen Zuständen (100-104) entsprechenden Werte vorgesehen sind.

10. Spracherkennungsvorrichtung nach Anspruch 8 oder 9,
**dadurch gekennzeichnet,**
**daß** die Spracherkennungsvorrichtung (7) bzw. die Spracherkennungsmittel (3) der Spracherkennungsvorrichtung (7) zur Durchführung des Verfahrens nach einem der Ansprüche 1-7 ausgestaltet sind.
